(19) **Europäisches Patentamt**

**European Patent Office**

**Office européen des brevets**

(11) **EP 0 632 436 B1**

(12) **EUROPÄISCHE PATENTSCHRIFT**

(45) Veröffentlichungstag und Bekanntmachung des Hinweises auf die Patenterteilung:
**10.05.2000  Patentblatt 2000/19**

(51) Int. Cl.[7]: **G11B 11/10**

(21) Anmeldenummer: **94201870.6**

(22) Anmeldetag: **29.06.1994**

(54) **Magnetooptisches Aufzeichnungsmedium**

Magneto-optical recording medium

Support d'enregistrement magnéto-optique

(84) Benannte Vertragsstaaten:
**DE FR GB**

(30) Priorität: **01.07.1993 DE 4321851**

(43) Veröffentlichungstag der Anmeldung:
**04.01.1995  Patentblatt 1995/01**

(73) Patentinhaber:
 • **Philips Corporate Intellectual Property GmbH**
  **52064 Aachen (DE)**
  Benannte Vertragsstaaten:
  **DE**
 • **Koninklijke Philips Electronics N.V.**
  **5621 BA  Eindhoven (NL)**
  Benannte Vertragsstaaten:
  **FR GB**

(72) Erfinder:
 • **Hansen, Peter, Dr.**
  **D-20097 Hamburg (DE)**

 • **Mergel, Dieter, Dr.**
  **D-20097 Hamburg (DE)**
 • **Raasch, Detlef**
  **D-20097 Hamburg (DE)**

(74) Vertreter:
 **Hartmann, Heinrich, Dipl.-Ing. et al**
 **Philips Corporate Intellectual Property GmbH,**
 **Habsburgerallee 11**
 **52064 Aachen (DE)**

(56) Entgegenhaltungen:
 **EP-A- 0 324 854    EP-A- 0 479 474**
 **WO-A-94/03892    DE-A- 3 623 285**
 **US-A- 5 143 798**

 • **JOURNAL OF APPLIED PHYSICS, Bd.61, Nr.8, 15. April 1987, NEW YORK US Seiten 3349 - 3351 W. REIM ET AL. 'TbxNdy(FeCo)1-x-y Promising materials for magneto-optical storage'**

Anmerkung:  Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein magnetooptisches Aufzeichnungsmedium mit einer magnetooptischen Schicht, welche aus einer quaternären Legierung $Nd_xTb_yFe_2Co_m$ besteht.

In der EP-A-0324 854 sind Aufzeichnungsmedien mit derartigen quaternären magnetooptischen Schichten beschreiben, bei denen die Mengenateile x = 5 bis 30 at% und y = 10 bis 30 at% vorgeschlagen werden. Ferner soll x/(z+m) < 0.5 gewählt werden. Es ist nicht ausgesagt, wie die Mengen der Übergangsmetalle (z und m) relativ zueinander gewählt werden können. Nach den Angaben dieser Druckschrift hergestellte magnetoopische Schichten umfassen solche mit völlig unbrauchbaren Eigenschaften. Auch die als Ausführungsbeispiele in der EP-A-0324 854 beschriebenen Zusammensetzungen ergeben beim Auslesen der gespeicherten Information zu niedrige Signalzurausch-Verhältnisse (CNR-Werte).

Aus EP-A-0 479 474 ist ein magnetooptisches Medium mit drei Schichten bekannt, von denen die erste Schicht wenigstens ein Seltenerdelement aus der Gruppe Tb,Dy und Gd und wenigstens ein Übergangselement aus der Gruppe Fe und Co, die zweite Schicht wenigstens ein Seltenerdmetall aus der Gruppe Nd und Pr und wenigstens ein Übergangsmetallelement aus der Gruppe Fe und Co und die dritte Schicht wenigstens ein Seltenerdelement aus der Gruppe TU, Dy und Gd und wenigstens ein Übergangselement aus der Gruppe Fe und Co enthalten kann.

Weiterhin sind aus W. Reim et al.: "$Tb_xNd_y(FeCo)_{1-x-y}$:Promising Materials for magnetooptical storage?", J. Appl.Phys.61(8), 3349ff.(1987) quaternäre Legierungen $Tb_xNd_y(FeCo)_{1-x-y}$ mit x > 0.08 und 0.04 > z + y > 0.15 bekannt, die einen hohen Kerr-Effekt und auch ausreichende Koerzitivkraft aufweisen.

In magnetooptischen Aufzeichnungsmedien kann Information gespeichert werden. Dazu wird in die hartmagnetische und in senkrechter Richtung anisotrope magnetooptische Schicht ein entsprechendes Muster von magnetisierten Bereichen eingeschrieben. Dazu werden die betreffenden Bereiche mittels eines Laserstrahls bis in den Bereich der Curie-Temperatur erhitzt, so daß dort wegen der Verminderung der Koerzitivkraft die Magnetisierung entsprechend der einzuschreibenden Information mittels eines geringen magnetischen Feldes umgekehrt werden kann. Ein Auslesen der gespeicherten Information ist auf der Grundlage des polaren magnetooptischen Kerr-Effektes möglich. Die Polarisationsebene des reflektierten Anteils des zum Lesen eingestrahlten polarisierten Laserlichts wird entsprechend der vorliegenden Magnetisierungsrichtung der Bereiche im oder entgegen dem Uhrzeigersinn gedreht.

Ein magnetooptischer Aufzeichnungsträger weist eine tragende Substratschicht auf. Beispielsweise auf einem Glassubstrat wird ein Photo-Polymerisationslack aufgespritzt. Die Lackschicht wird mechanisch mit einer Rillenstruktur versehen und durch UV-Licht gehärtet. Auf diese Lackschicht wird über eine dielektrische Schicht (z.B. Aluminium-Nitrid oder Siliziumnitrid) die magnetooptische Schicht aufgebracht. Die dielektrische Schicht dient zur Anpassung der Brechungsindizes zwischen Substrat und magnetooptischer Schicht. Schließlich wird eine reflektierende Al-Schicht aufgebracht. Statt eines mit Lack versehenen Glassubstrats kann auch ein Kunststoffsubstrat verwendet werden.

Die Legierungsbestandteile einer magnetooptischen Schicht müssen derart ausgewählt und bemessen werden, daß insbesondere folgende Anforderungen ausreichend erfüllt werden:

- eine senkrecht zur Schicht gerichtete uniaxiale Anisotropie, damit die Information auf der Grundlage des Kerr-Effekts auslesbar ist,
- hohe magnetooptische Wirkung auch bei begrenzter Laserleistung,
- die Curie-Temperatur $T_C$ soll im Bereich von 400 K bis 600 K liegen, damit sich stabile Bereiche ergeben, deren Information mit hohem Rauschabstand auslesbar ist,
- hohe Koerzitivkraft und niedrige Magnetisierung bei Auslesetemperaturen.

Ein entscheidendes Kriterium für die Güte einer magnetooptischen Schicht ist natürlich das Signal zu Rausch-Verhältnis CNR beim Auslesen der gespeicherten Information. Die CNR-Werte sind im allgemeinen abhängig von der Wellenlänge des zum Auslesen verwendeten Laserlichts. Bei bekannten Aufzeichnungsmedien sind hohe CNR-Werte nur bei bestimmter vorgegebener Wellenlänge des Ausleselichts erreichbar.

Ermittelte CNR-Werte hängen auch von der Bandbreite des Frequenzintervalls um die zu messende Frequenz ab, mit der das magnetooptische Signal detektiert wird.

Ein Beurteilungskriterium ist ferner die Kompensationstemperatur $T_{Comp}$, bei welcher sich die magnetischen Momente der verschiedenen Legierungsbestandteile der ferrimagnetischen magnetooptischen Schicht bei einer bestimmten Temperatur zu Null kompensieren (Sättigungsmagnetisierung = Null).

Die Güte einer magnetooptischen Schicht kann man grob aus der Lage von $T_{Comp}$ und $T_C$ (Curie-Temperatur) abschätzen ($T_{Comp} < T_C$). Das zwischen beiden Temperaturen liegende Maximum der Sättigungsmagnetisierung ist etwa proportional der Differenz dieser Temperaturen. Auch die sich im Bereich zwischen diesen Temperaturen beim thermomagnetischen Schaltprozeß ergebenen Koerzitivfeldstärken $H_C$ sind von $T_{Comp}$ abhängig, wobei schon geringfügige Veränderungen der Zusammensetzung der Legierungsbestandteile erhebliche Verschiebungen von $T_{Comp}$ zur Folge haben können.

Der Erfindung liegt die Aufgabe zugrunde, ein magnetooptisches Aufzeichnungsmedium der eingangs genannten Art zu schaffen, deren magnetooptische Schicht sowohl beim

Einschreiben als auch beim Auslesen der eingeschriebenen Information ein gutes Gebrauchsverhalten, insbesondere ein hohes Signal-Rausch-Verhältnis aufweist. Das vorteilhafte Gebrauchsverhalten soll weitgehend unabhängig davon sein, welche Wellenlänge das Auslese-Laserlicht aufweist.

Die Lösung gelingt, wenn die Mengenantiele x, y, z und m der Legierungsbestandteile wie folgt gewählt sind:

$x = 4$ bis $16$ at%

$y = 20$ bis $30$ at%

$m = 36,5 \pm 4,5 + x\text{-}y$ at%

$z = 100 - x - y - m$ at%  und

$x/(z+m) < 0,26$ .

Zur Lösung der Aufgabe ist es weiterhin vorteilhaft, folgende Bedingung einzuhalten: $30$ at% $< z < 55$ at%.

Die Erfindung wirkt sich besonders vorteilhaft bei Dicken der magnetooptischen Schicht im Bereich von 30 bis 80 nm aus.

Für Werte $x < 4$ at% (Nd-Anteil) ergeben sich beim Auslesen mit sichtbarem Licht zu geringe Signal-Rausch-Verhältnisse CNR. Für $x > 16$ at% sind die CNR-Werte bei Licht beliebiger Wellenlänge zu gering. Bei $x > 25$ at% ist keine Information mehr einschreibbar.

Auch für y-Werte $y < 20$ at% (Tb-Anteil) erhält man zu kleine CNR-Werte. Bei $y > 30$ at% ist die Kompensationstemperatur $T_{comp}$ zu niedrig.

Außerhalb des Bereiches $6$ at% $< m < 37$ at% (Co-Anteil) ergeben sich keine brauchbaren Curie-Temperaturen $T_C$. Wenn m zu hoch gewählt wurde, ist auch $T_C$ zu hoch. Die thermische Empfindlichkeit der magnetooptischen Schicht ist dann zu gering, so daß man zu hohe Laserleistungen zum Einschreiben benötigen würde.

Wenn m zu niedrig ist, ergeben sich infolge der dann ebenfalls niedrigen Curie-Temperatur zu kleine magnetooptische Signale bei der Auslesetemperatur. Außerdem werden die Information tragenden Bereiche instabil.

Werte von $x/(z+m) < 0,26$  sind insbesondere dann vorteilhaft, wenn im Auslesewellenlängenbereich 400 nm $\leq \lambda \leq$ 820 nm hohe SignalzuRausch-Verhältnisse gewünscht werden. Bei zu hohen Werten, insbesondere bei $x/(z+m) > 0,35$  ist es wegen zu niedriger Curie-Temperatur nicht mehr zuverlässig möglich, Informationen einzuschreiben.

Erfindungsgemäße magnetooptische Aufzeichnungsmedien können mit Laserlicht im Wellenlängenbereich von sichtbarem Licht bis zu IR-Strahlung zuverlässig ausgelesen werden.

In Tabelle 1 sind die Zusammensetzungen von 25 verschiedenen Proben und zugehörige Meßergebnisse für $T_{Comp}$, $T_C$ und CNR bei den Leselicht-Wellenlängen 820 nm, 647 nm und 458 nm angegeben. Bei den Proben 1 bis 11 handelt es sich um erfindungsgemäße Legierungen. Die Zusammensetzungen der Vergleichsproben 12 bis 25 liegen außerhalb des erfindungsgemäßen Bereichs.

Die zum Schreiben und Löschen aufgebrachten externen magnetischen Feldstärken $H_{ext}$ wurden im Bereich $16$kA/m $\leq$ Hext $\leq$ 40 kA/m dahingehend optimiert, daß sich maximale CNR-Werte ergeben. Beim Auslesen wurden Rekorder-Daten gemäß Tabelle 2 verwendet. Darin bedeuten:

NA: numerische Apertur des Lese-Lasers

$v_r$: Lineargeschwindigkeit der magnetooptischen Platte

$f_{puls}$: Pulsfrequenz des Laserstrahls

$t_{puls}$: Pulsdauer

$P_r$: Laserleistung

Das reflektierte Signal wurde mit einer Bandbreite von 30 KHz detektiert.

Die Proben 19 bis 25 sind nicht zur Verwendung für magnetooptische Aufzeichnungsmedien geeignet, da kein auslesbares Signal eingespeichert werden kann.

Mit den Proben 12 bis 18 konnten selbst bei 820 nm-Leselicht keine CNR-Werte > 50 dB erreicht werden.

Mit den erfindungsgemäßen Proben 1 bis 11 wurden vorteilhafte Kombinationen für $T_{Comp}$ und $T_C$ und deshalb CNR-Werte > 50 zumindest im Bereich hoher Lese-Wellenlängen erreicht. Sogar für niedrige Lese-Wellenlängen im Bereich von 458 nm ergaben sich außergewöhnlich hohe CNR-Werte.

Mit bekannten Legierungen für magnetooptische Schichten war es mit einer einzigen magnetooptischen Schicht nicht möglich, in einem derart breiten Wellenlängenbereich des Laserlichts gleichzeitig hohe CNR-Werte zu erzielen. In erfindungsgemäße magnetooptische Aufzeichnungsmedien ist Information mit relativ geringer Laserleistung dauerhaft einschreibbar. Die eingeschriebene Information kann mit Licht von beliebiger Wellenlänge im Bereich des sichtbaren Lichts bis zur IR-Strahlung zuverlässig und rauscharm ausgelesen werden.

Tabelle 1

| Probe Nr. | Zusammensetzung | $T_{comp}$ (K) | $T_C$ (K) | CNR (dB) | | |
|---|---|---|---|---|---|---|
| | | | | 820 nm | 647 nm | 458 nm |
| 1 | $Tb_{23,7}Nd_{6,7}Fe_{51,7}Co_{17,9}$ | 320 | 510 | 55,2 | 55,0 | 49,0 |
| 2 | $Tb_{29,2}Nd_{8,7}Fe_{41,8}Co_{20,3}$ | 395 | 510 | 53,9 | | |
| 3 | $Tb_{28,5}Nd_{9,6}Fe_{40,2}Co_{21,7}$ | 355 | 500 | 54,5 | 55,0 | 47,5 |
| 4 | $Tb_{28,3}Nd_{11,0}Fe_{39,6}Co_{21,1}$ | 365 | 490 | 54,0 | 53,9 | 47,5 |
| 5 | $Tb_{28,3}Nd_{8,5}Fe_{46,7}Co_{16,5}$ | 350 | 460 | 53,1 | | |
| 6 | $Tb_{28,0}Nd_{10,9}Fe_{45,2}Co_{15,9}$ | 335 | 430 | 53,3 | | |
| 7 | $Tb_{27,5}Nd_{9,5}Fe_{46,9}Co_{16,1}$ | 325 | 450 | 51,9 | | |
| 8 | $Tb_{21,4}Nd_{14,9}Fe_{38,2}Co_{25,5}$ | 235 | 490 | 50,9 | | |
| 9 | $Tb_{22,6}Nd_{15,4}Fe_{31,9}Co_{30,1}$ | 300 | 450 | 52,1 | | |
| 10 | $Tb_{22,1}Nd_{15,7}Fe_{31,8}Co_{30,4}$ | 290 | 500 | 52,7 | | 46,5 |
| 11 | $Tb_{22,8}Nd_{15,3}Fe_{31,9}Co_{30,0}$ | 320 | 470 | 51,8 | | |

Tabelle 2

| | Wellenlänge des Lese-Lichts | | |
|---|---|---|---|
| | 820 nm | 647 nm | 458 nm |
| NA | 0,52 | 0,52 | 0,60 |
| $V_r$ | 5,0 m/s | 5,0 m/s | 5,0 m/s |
| $f_{puls}$ | 2,1 MHz | 2,1 MHz | 2,0 MHz |
| $t_{puls}$ | 50 ns | 40 ns | 200 ns |
| $P_r$ | 1,5 mW | 1,5 mW | 1,05 mW |

**Patentansprüche**

1.  Magnetooptisches Aufzeichnungsmedium mit einer magnetooptischen Schicht, welche aus einer quaternären Legierung $Nd_xTb_yFe_zCo_m$ besteht, wobei die Mengenanteile wie folgt gewählt sind:

    x = 4 bis 16 at%
    y = 20 bis 30 at%
    m = 36,5 ±4,5 + x - y at%
    z = 100 - x - y - m at%
    x/ (z+m) <0,26

2.  Magnetooptisches Aufzeichnungsmedium nach Anspruch 1,
    dadurch gekennzeichnet,
    daß 30 at% < z < 55 at% ist.

3.  Magnetooptisches Aufzeichnungsmedium nach Anspruch 1,
    dadurch gekennzeichnet,
    daß die Dicke der magnetooptischen Schicht 30 bis 80 nm beträgt.

4. Verwendung des magnetooptischen Aufzeichnungsmediums nach Anspruch 1 für Aufnahme- und /oder Wiedergabegeräte mit einem Aufzeichnungslaser und/oder Ausleselaser, deren Wellenlänge im Bereich von 820 nm bis 450 nm liegt.

**Claims**

1. A magneto-optical recording medium comprising a magneto-optical layer which is composed of a quaternary alloy of $Nd_xTb_yFe_zCo_m$, the quantitative proportions being selected as follows:

   $x = 4-16$ at.%
   $y = 20-30$ at.%
   $m = 36.5 \pm 4.5 + x - y$ at.%
   $z = 100 - x - y - m$ at.% .
   $x/(z+m) < 0.26$ .

2. A magneto-optical recording medium as claimed in Claim 1, characterized in that 30 at.% < z < 55 at.%.

3. A magneto-optical recording medium as claimed in Claim 1, characterized in tat the thickness of the magneto-optical layer is 30 to 80 nm.

4. The use of die magneto-optical recording medium as claimed in Claim 1, for recording and/or playback devices comprising a recording laser and/or a reading laser having wavelengths in the range from 820 nm to 450 nm.

**Revendications**

1. Support d'enregistrement magnéto-optique avec une couche magnéto-optique qui se compose d'un alliage quaternaire $NdxTb_yFe_zCo_m$, les proportions en quantité étant sélectionnées comme suit :

   $x = 4$ à 16% en atome,
   $y = 20$ à 30% en atome,
   $m = 36,5$ +/- 4,5 + x - y % en atome,
   $z = 100 - x - y - m$ % en atome, et
   $x/(z+m) < 0,26$ .

2. Support d'enregistrement magnéto-optique selon la revendication 1,
   <u>caractérisé en ce</u>
   que 30% at < z < 55% at.

3. Support d'enregistrement magnéto-optique selon la revendication 1,
   <u>caractérisé en ce</u>
   que l'épaisseur de la couche magnéto-optique s'élève à 30 à 80 nm.

4. Mise en oeuvre du support d'enregistrement magnéto-optique selon la revendication 1 pour les appareils d'enregistrement et/ou de lecture avec un laser d' enregistrement et/ou un laser de lecture dont les longueurs d'onde se situent dans la plage de 820 nm à 450 nm.